# EUROPEAN PATENT APPLICATION

(11) **EP 1 857 899 A2**
(43) Date of publication of application: **21.11.2007**
(21) Application number: 07009826.4
(22) Date of filing: 16.05.2007
(51) Int. Cl.: G05B 19/05

(54) **Remote I/O system**

(30) Priority: 17.05.2006 JP 2006138346
(71) Applicant: OMRON CORPORATION, Kyoto-shi, Kyoto 600-8530 (JP)
(72) Inventor: Ikeno, Naoaki, Shimogyo-ku,Kyoto-shi Kyoto 600-8530 (JP)
(74) Representative: Kilian, Helmut

(57) **Abstract**

A remote I/O system includes a plurality of slave stations which are I/O terminal devices, and a master station which is a PLC. The master station includes a communication failure detector configured to assume that a communication failure occurred when the master station has not received a reply from a failed slave station among the slave stations. The master station has, as a failure operation mode, a partial communication halt mode where the master station stops communicating with the failed slave station, allows the failed slave station to maintain the communication failure by not performing a communication resuming process on the failed slave station, and continues to communicating with the rest of the slave stations except the failed slave station.

## Description

### TECHNICAL FIELD

The present disclosure relates generally to a communication system which controls an FA (factory automation) device.

### BACKGROUND

A remote I/O system often includes a master station and multiple slave stations. The master station communicates with the multiple slave stations by using wired or wireless data transmission. The master station controls network communication between the master station and the slave stations. The slave stations control I/O (input/output) devices, etc.

For example, Japanese Laid-open Patent Application No. 9-237116 describes a system which stops overall communication with all slave stations even when communication between the master station and a single slave station fails. In such a case, a communication failure with respect to a single slave station stops all I/O communication with all slave stations.

In view of the above, an improved failure operation mode performed by the master station would be highly beneficial.

### SUMMARY

The invention described herein provides a remote I/O system including a plurality of slave stations which are I/O terminal devices; and a mater station which is a PLC (programmable logic controller) configured to communicate with the plurality of the slave stations. The master station includes a communication failure detector configured to assume that a communication failure occurred when the master station has not received a reply from a failed slave station among the slave stations. The master station has, as a failure operation mode, a partial communication halt mode where the master station stops communicating with the failed slave station, allows the failed slave station to maintain the communication failure by not performing a communication resuming process on the failed slave station, and continues to communicating with the rest of the slave stations except the failed slave station.

The invention described herein provides a remote I/O system including a plurality of slave stations which are I/O terminal devices; and a mater station which is a PLC (programmable logic controller) configured to communicate with the plurality of the slave stations. The master station includes a communication failure detector configured to assume that a communication failure occurred when the master station has not received a reply from a failed slave station among the slave stations. The master station has a table specifying a failure operation mode with respect to each of the slave station. The master station performs the specified failure operation mode on the failed slave station when the communication failure occurs.

These and other features and advantages of the invention will be described in more detail below with reference to associated drawings.

### BRIEF DESCRIPTION OF THE DRAWINGS

The invention may best be understood by reference to the following description taken in conjunction with the accompanying drawings, which illustrate specific embodiments of the present invention. In the drawings, similar reference numerals/symbols correspond to similar elements.
FIGS. 1A and 1B illustrate one operation mode for a communication failure.
FIGS. 2A and 2B illustrate another operation mode for a communication failure.
FIGS. 3A and 3B illustrate still another operation mode for a communication failure.
FIG. 4 illustrates an example of a screen which configures the operation mode for a communication failure, displayed on an input/display device such as a personal computer connected to the master station.
FIGS. 5A-5C illustrate an example of the configuration table to configure the failure operation mode.
FIG. 6 illustrates a flowchart of the constant timer process managing the timing of transmission from the master station.
FIG. 7 illustrates a normal communication process of the master station.
FIG. 8 illustrates a flowchart of the constant timer process of the master station.
FIG. 9 illustrates a normal reception process of the master station.
FIG. 10 illustrates the process at the master station end when a communication failure is detected.
FIG. 11 illustrates a process which the master station performs when a communication failure occurs according to the second example embodiment of the invention.
FIG. 12A shows an example of a software program for performing the total communication resumption which is applicable to the total communication halt of the failure operation mode.
FIG. 12B shows an example of a software program for performing the communication resumption on the designated slave which is applicable to the partial communication halt of the failure operation mode.
FIG. 13 illustrates a flowchart of the process at the master station with respect to the above-described automatic communication resumption.
FIG. 14 illustrates an example of the total communication resumption/partial communication resumption by such an event.
FIG. 15 illustrates a flowchart showing the communication resuming process at the master station according to the manual communication restart using an event.
FIG. 16 illustrates a flowchart showing details of the participation invitation/communication resuming process performed by the master station when the communication is resumed.

### DESCRIPTION OF EXAMPLE EMBODIMENTS

### Overview

In this specification, a "PLC" (programmable logic controller) used in a master station includes any suitable controller which may be implemented by, for example, a stand-alone programmable controller, a PC (personal computer) expansion board having PLC functionality, or any other sequence controller. An "I/O terminal" as a slave station includes any suitable device with communication functionality to communicate with the master station. Such an "I/O terminal" may be implemented by, for example, an I/O terminal which can be connected to an I/O device such as a sensor, a switch, etc., a temperature controller which has communication slave functionality, or any other slave station with communication functionality.

The present invention will now be described in detail with reference to a preferred embodiment thereof as illustrated in the accompanying drawings. In the following description, specific details are set forth in order to provide a thorough understanding of the present invention. It will be apparent, however, to one skilled in the art, that the present invention may be practiced without using some of the implementation details set forth herein. It should also be understood that well known operations have not been described in detail in order to not unnecessarily obscure the present invention. Further, it should be noted that the techniques of the present invention could be applied to a variety of systems or electronic devices such as standard PLC control systems, and also, safety control systems which require higher reliability.

"Safety control systems" typically include safety controllers, and safety I/O terminals, which may be used with trimming machines, cutting machines, manufacturing robots with arms, etc. Safety controllers ensure higher safety and reliability in their control by incorporating self-diagnostic functionality for safety in addition to logic calculation functionality and input/output control functionality provided in common PLCs. When a safety controller detects an abnormal condition (or a "failure") by its self-diagnostic result, the safety controller is overridden to perform a safety control (a fail-safe function) in order to avoid danger caused by its control result. A safety I/O terminal also has a self-diagnostic function. In other words, when such a safety I/O terminal detects a failure by its self-diagnostic result, the safety I/O terminal has a fail-safe function which performs control in such a way that its control does not cause any danger. As such, safety control systems are capable of preventing operation of manufacturing robots, etc. from leading to danger.

The safety as referred to here may be defined by standardized safety standards. Safety standards include, for example, IEC61508, and EN standards. IEC61508 (International Electrotechnical Commission for Functional Safety of Electrical/Electronic/Programmable Electronic Safety-Related Systems) defines probability of failure per hour, and categorizes the SIL (safety integrity level) into four levels depending on the probability. EN standards assess risks of machinery, and require taking measures to reduce the risks. In EN 954-1, five safety categories are defined. In the present specification, safety controllers, safety I/O terminals, safety control systems, etc. comply with one of these safety standards.

The safety control system may be referred to as a "safe control system." The safety controller may be referred to as a "safe controller," or a "safe control device." The safety I/O terminal may be referred to as a "safety slave station," a "safety slave unit," or simply a "safety slave," where the term "safe" may be used for the term "safety" interchangeably.

A safety control system in which a safety controller is connected to safety I/O terminals by a network has been known. The safety controller has a communication master function which enables network communication with the safety I/O terminals. In the case where the safety controller includes multiple unit enclosures (for example, a power supply unit, a CPU (central processing unit) unit, an I/O unit, a communication unit, etc.) which are connected with each other, i.e., the safety controller is building-block type, the communication master unit has the communication master function. This communication master unit may be referred to as a "safety master station," a "safety master unit," or a "safety master," where the term "safe" may be used for the term "safety." In the following example embodiments, the safety controller is referred to as a "master station."

The safety I/O terminals have a network communication function, i.e., a communication slave function, which enables communication with the master station. The safety I/O terminal has a connection terminal to which at least one of (i) an input device such as a switch outputting an on/off signal, and (ii) an output device to which a control signal is output. Examples of the input device include an emergency stop switch, a light curtain, a door switch, a 2-hand switch, etc. Examples of the output device include a safety relay, and a contactor. The input device and the output device are also in compliance with a safety standard. The safety I/O terminal generates a control data based on a signal input from a safety-related device connected to the safety I/O terminal, and sends the generated control data to the master station by network communication. In the following example embodiments, the safety I/O terminals are referred to as "slave stations."

If the master station is building-block type, each unit is connected to a common internal bus, and performs bus communication with the CPU unit which controls the master station, thereby exchanging data. An I/O unit connected to the bus has a connection terminal to which a safety-related input device or a safety-related output device is connected. The master station receives an input signal of an input device input by network communication from the slave station, or receives an input signal of an input device connected to an I/O unit connected to the bus. The master station then performs logic calculation of the input signal based on a pre-stored logic program. The master station outputs an output signal based on the calculation result via the communication master unit by network communication to the slave station, or to the connected I/O unit. The I/O unit and the slave station output the output signal to an output device. By repeating this sequence of operation, the master station controls the overall system including a manufacturing robot.

Communication cycles between the master station and the slave stations may be synchronized with repetitive executions by the master station, or may not be synchronized with the executions. The logic program performing the logic calculation process in the master station or the CPU unit may be pre-coded by a programmer. When coding such a program, a ladder language, a mnemonic language, or a function block language may be used. Examples of a programming language include an interpreter language, a script language, an assembly language, a high level language, and a Java (registered trademark) language. A source code which is coded in one of these programming languages is processed through an assemble operation and a compile operation, and is executed by the CPU.

A safety relay or a contactor which is an output device connected to the slave station is coupled to a manufacturing robot, a processing machine, or a cutting machine. When a contact of the relay or the contactor is on (or closed), the manufacturing robot, as an example, moves while the contact is off (or open), the manufacturing robot stops. As such, the master station controls the manufacturing robot etc. as an ultimate control object by controlling the on/off state of an output device. Specifically, when the master station recognizes from the communication from the slave station that an emergency stop switch SW is properly activated, the master station turns off the output device (e.g., a relay or a contactor) to prevent the control object from operating dangerously, or takes necessary safety precautions immediately by overriding the control into a safety mode. When an emergency stop switch SW or an input device generates a diagnostic result that a failure occurred, the master station, irrespective of the operation of the emergency stop switch SW or the on/off state of the input device, takes necessary safety measures immediately by turning off the operation of the control object to prevent the object from operating dangerously, or by overriding the control into a safe condition.

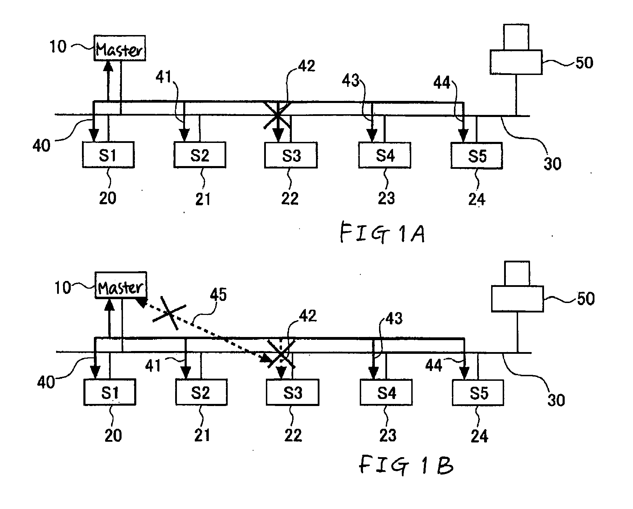

FIG. 1A and FIG. 1B illustrate an operation mode for a communication failure at the master station end in a remote I/O system according to an example embodiment of the invention, which is applicable to the safety control system. As shown in FIG. 1, the remote I/O system includes a master station 10, slave stations 20-24 (hereinafter referred to as S1-S5), and a communication cable 30 which connects the stations. In the figure, reference symbols 40-44 represent communication paths from the master station 10 to each slave station (S1-S5), and reference symbol 50 represents a configurator connected to the system. In a remote I/O system shown in FIG. 1, the master station is typically connected to an input device which has a display screen such as a personal computer, and the slave stations are connected to the I/O devices functioning as control objects.

In an example embodiment of a remote I/O system shown in FIG. 1A, it is assumed that a communication failure occurred between the master station 10 and the slave station S3. In this example embodiment as shown in FIG. 1B, only the communication with the slave station S3 which experiences a communication failure is stopped while master/slave communication with the other slave stations (i.e., S1, S2, S4, and S5) is continued to maintain normal communication. Here, the master station does not perform participation invitation (or participation solicitation) process 45 on the slave station S3 which has a failure. As a result, even after the communication failure is resolved, the participation process of the slave station S3 into the system is not performed, thereby maintaining the condition of the failure which facilitates identification of the slave station S3 with the communication failure. By utilizing this operation, when failures occur at multiple slave stations, the failure condition at each slave having a failure is maintained, thereby identifying the locations of the multiple failures at one time.

In the failure operation mode, the failure condition is maintained at the slave with a failure. In such a situation, the communication between the slave station and the master station is stopped. However, whether the output of the slave station is turned off may be configurable depending on which rule the remote I/O system applies. Specifically, when the system applies the safety control described earlier, the system may turn off the output of the slave station with a failure, thereby overriding the slave station into a safe mode for fail safe. By contrast, when the remote I/O system applies a standard control, the output in a failure condition can be selectively set to ON or OFF depending on a control object or characteristics of the device.

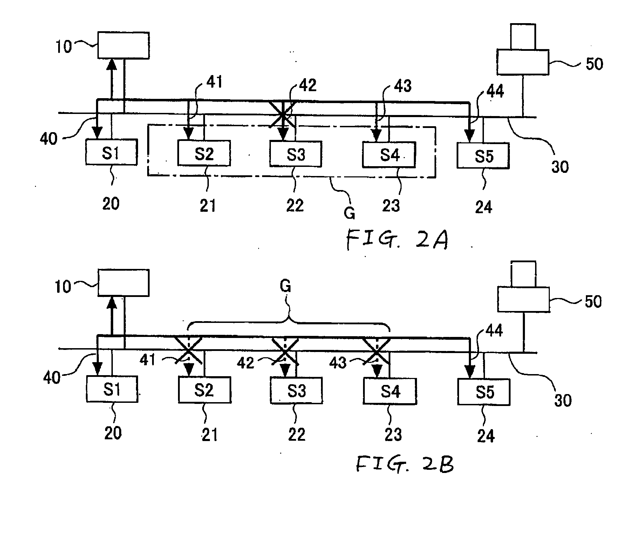

FIG. 2A and FIG. 2B illustrate another operation mode for a communication failure. The remote I/O system shown in the figures has the same configuration of the remote I/O system shown in FIG. 1 A and FIG. 1 B, where corresponding elements are represented by the same reference symbols and the description stated above will be omitted. The difference between FIG. 2A and FIG. 1A is that the slave stations S2-S4 in FIG. 2A are grouped. In such a remote I/O system, grouped multiple slave stations may be used to perform an I/O control on a specific device or a manufacturing line. In this example embodiment, the slave stations S2-S4 are grouped into a slave group G. When a part of the slave group G (e.g., slave station S3) experiences a communication failure, the communication with slave group G (slave stations S2, S3, and S4) including the slave station can be stopped. This function enables communication halt to an individual device or an individual manufacturing line using a plurality of slaves in the system.

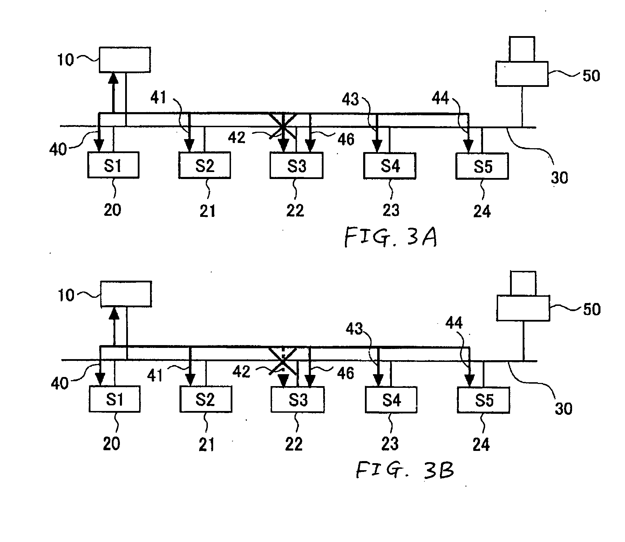

FIG. 3A and FIG. 3B illustrate still another operation mode for a communication failure. The remote I/O system shown in the figures has the same configuration of the remote I/O system shown in FIG. 1A and FIG. 1B, where corresponding elements are represented by the same reference symbols and the description stated above will be omitted. The difference between FIG. 3A and FIG. 1A is that the slave station S3 in FIG. 3A experiencing a communication failure performs double connection communication 42 and 46 for input and output. When the slave station has two communication paths 42 and 46 connected to the master station, one of the paths can be utilized to continuously monitor the status of the slave while the other of the paths is failed. In a single slave station has two connection paths to the master station, when one of the paths is failed and the communication is broken, the system may selectively assume two alternative modes. That is, the system may stop the communication through the other path, or may continue the communication through the other path.

In the first example embodiment of the invention, the user can select an operation mode for a communication failure among the different operation modes described above, and can utilize the selected mode for such a situation.

### Detailed Operation Modes

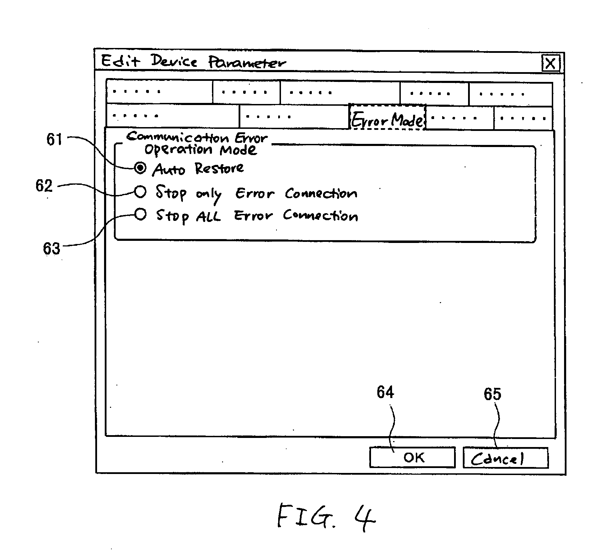

FIG. 4 illustrates an example of a screen which configures the operation mode for a communication failure, displayed on an input/display device such as a personal computer connected to the master station 10. The process for configuring the operation mode at the master station end for a communication failure in the example embodiment will now be described in detail. In the figure, a tab screen of an "error mode" is shown where a configuration for an error is performed in a device parameter edit screen for each slave station (S1-S5) connected to the master station 10. In this figure, tabs other than the error mode are omitted. The error mode configuration screen is a configuration screen where a failure operation mode which is common to all slave stations incorporated in the remote I/O system, and where the failure operation mode at the master end can be configured for a situation in which a slave station in the system experiences a communication failure. As shown in FIG. 4, "auto restore (or auto reset)" 61, "stop only error connection" 62, and "stop all connections" 63 can be selected. In the "auto restore" mode 61, when a communication failure occurs to a single slave station or multiple slave stations, the master station will (i) continue normal communication with the other slave stations which do not have a failure, (ii) perform a participation invitation sequence by a polling method, (iii) when the failed slave station is recovered from the failure, automatically perform a participation process to the system and then perform normal communication.

In the "stop only error connection" mode 62, the master station will (i) stop only the communication with the slave station experiencing a communication failure, and (ii) continue normal communication with the other slave stations. In this mode, unlike the "auto restore" mode described above, the master station will not perform the participation invitation sequence, and the slave station having the failure will maintain the failure condition.

In the "stop all connections" mode 63, the master station will stop the communication with all slave stations in the system including the slave station experiencing the communication failure. The configuration screen shown in FIG. 4 may include a mode where the communication with multiple designated slave stations will be stopped in order to deal with the grouping of the slave stations for "partial communication halt" described above.

In FIG. 4, the screen provides an OK button 64, and a cancel button 65 in the right lower corner. In the configuration screen, by selecting an appropriate mode among the failure operation mode 61-63 which are selectable, and then clicking the ok button 64, the failure operation mode utilized at the master station end when a communication failure occurs in the master/slave communication is selected. When a communication failure occurs in the remote I/O system, the selected failure operation mode is automatically performed by the master station. By clicking the cancel button 65, this configuration screen is closed, and the previous configuration is kept without applying a failure operation mode even when the failure operation mode is selected.

### Mode Configuration Table

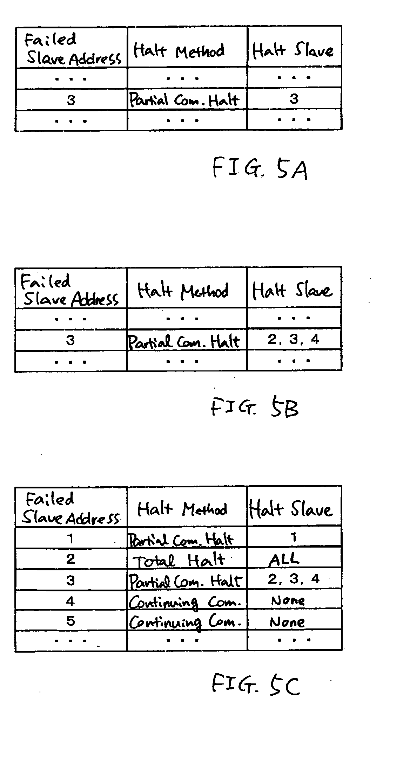

In the second example embodiment of the invention, the master station can configure a failure operation mode for a communication failure described above separately for each slave in the remote I/O system. In order to implement such a function, the master station includes a memory which contains a configuration table to enable a user to configure a failure operation mode for a communication failure with respect to each slave station. FIGS. 5A-5C illustrate an example of the configuration table to configure the failure operation mode. FIG. 5A illustrates the failure operation mode when a communication failure occurs described above referring to FIGS. 1A-1B. The left column of the table represents information (e.g., a slave address) identifying a "failed slave" (i.e., a slave station which experiences a communication failure). In this example, it is assumed that a communication failure occurred at the slave S3 as shown in FIGS. 1A-1B. The left column is filled with a slave address "3." As a slave address, any suitable information which uniquely identifies the slave station can be used. In this example, the other slaves (S1, S2, S4, and S5) do not experience a failure, and thus, the slave addresses are omitted for these slaves. Next, the middle column of the table represents a communication halt method (or a failure operation mode) with respect to the slave station when the slave station with the slave address indicated by the left column has a communication failure. In this example, the column is filled with a "partial communication halt" mode as a failure operation mode, in which only the communication with the slave station S3 is stopped, and the normal communication with the other slave stations is continued. The right column represents a slave address of a slave station to which the halt method (or the failure operation mode) indicated in the middle column is applied. Here, as a halt slave, the slave address "3" for the slave station S3 is filled in the column.

The table shows that, when the slave station S3 has a communication failure, the failure operation mode at the master station end is a partial communication halt mode, and a slave station subject to such a partial communication halt mode is the slave station S3.

By providing the configuration table, the master station refers to the configuration table when a communication failure occurs. If the failed slave is the slave station S3, the master station applies the partial communication halt mode to the slave station S3. In other words, the master station stops only the communication with the slave station S3, and continues the normal communication with the other slave stations. In this mode, it is assumed that the master station does not perform a participation invitation sequence on the slave station S3, and thus, the failure condition of the slave station S3 is maintained.

In FIG. 5B, the left and middle columns of the table are similar to those of the table shown in FIG. 5A. The right column of the table in FIG. 5B is different from that of the table in FIG. 5A, and is filled with multiple slave station addresses of the slave stations which are subject to the communication halt operation. The example of FIG. 5B corresponds to the failure operation mode described above referring to FIGS. 2A and 2B, more specifically to the slave group G which groups multiple slave stations. This reply mode assumes that, when one of the slave stations grouped into the slave group G (e.g., S3) experiences a communication failure, the master station stops the communication with the other slave stations (e.g., S2 and S4) included in the slave group G in addition to the failed slave station S3. The configuration table can be configured to define that, when the slave stations S2 and S4 have a communication failure, the communication with the slave station S2, S3, and S4 will be stopped.

In the configuration table of FIG. 5C, the reply modes (or the failure operation modes) described above referring to FIGS. 4A and 4B exist, and further, a "total halt" mode and a "continuing communication" mode are newly added. As illustrated in FIG. 5C, the halt mode (the middle column) for each slave station S1-S5, and the slave station subject to the halt mode (the right column) are specified. The configuration for the slave station S and S3 is similar to that shown in FIGS. 5A and 5B.

In FIG. 5C, the "total halt" mode defined as a halt method corresponding to the slave station S2 (failed slave address "2") is a halt mode where, when the slave station S2 has a communication failure, the master station will stop the communication with all slave stations in the remote I/O system including the slave station S2. The "continuing communication" mode defined as a halt method corresponding to the slave stations S4 and S5 is a halt mode where, when the slave station S4 (or S5) has a communication failure, the master station will continue the normal communication with all slave stations. In such a case, in the slave station S4 (or S5) where a communication failure occurred, the communication is temporarily halted. However, the master station performs a participation invitation process on the failed slave station S4 (or S5) having a communication failure by a polling method. Once the failure condition of the slave station is resolved, the master station will perform a participation process to the system, and continue the normal communication with all slave stations.

As described above, the second example embodiment of the invention enables to individually configure the failure operation mode of the master station with respect to each slave station in the system depending on a failure location (i.e., a slave station with a communication failure) when the communication failure occurs. This configuration enables to pre-configure the failure operation mode which the user needs depending on the use or type of the I/O device connected to each slave station, or on whether multiple slave stations are used to control a single, device or a single manufacturing line. Such a pre-configuration enables to flexibly control the action to be taken when a failure occurs.

In the second example embodiment, the failure operation configuration screen at the master station end may use the configuration screen used in the first example embodiment shown in FIG. 4. In such a case, unlike a single configuration screen in which the failure operation mode at the master station end for all slave stations in the system is commonly configured, a configuration screen for each slave station may be necessary. In other words, in the example of FIG. 4 where 64. slave stations at maximum can be connected to the system, 64 configuration screens may be necessary to setup. Such a setup function can be implemented by associating each failure operation configuration screen with each slave station on a one by one basis. In such a case, it may be beneficial to display information identifying a slave station (for example, a node number, etc.) which corresponds to the configuration screen.

### Processes for Normal Communication

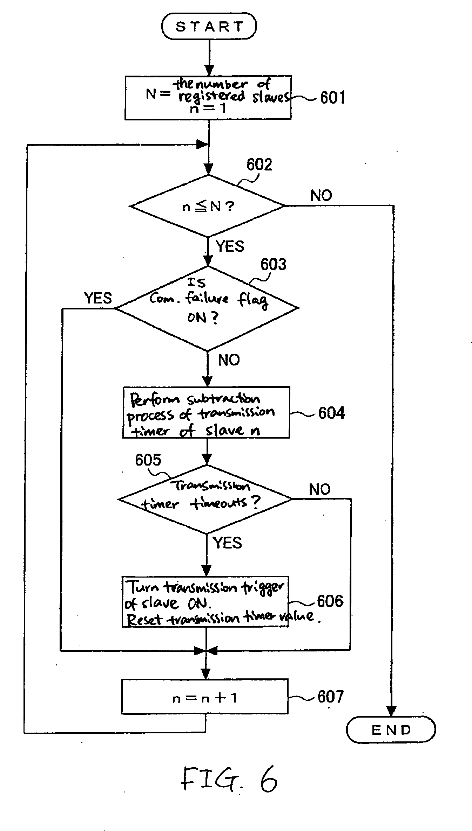

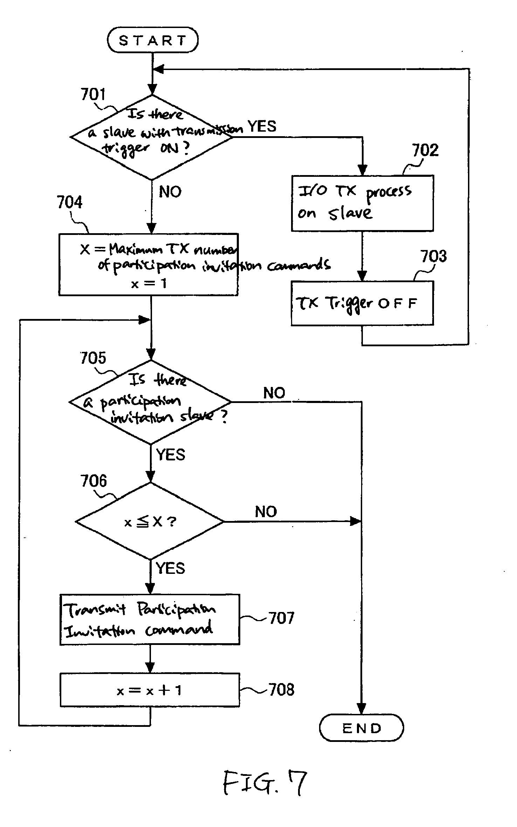

The processes for the normal operation in the master station 10 when no communication failure occurs will be described referring to FIGS. 6-9. The processes shown in these figures are applicable to the first and the second example embodiments of the invention. FIG. 6 illustrates a flowchart of a constant timer process (part 1). FIG. 7 illustrates a normal communication process of the master station 10 when no communication failure occurs. A broadcasting method and a polling method are typically used for the master/slave communication in the remote I/O system. The broadcasting method is a communication method in which the master station transmits to all slave stations at the same time. The polling method is a communication method in which the master station identifies identifying information such as an address of the slave station subject to the transmission, and then, transmits to the slave station by identifying the slave station. In the example embodiments, the master station utilizes the polling method to perform the master/slave communication. In the case of the polling method to perform the master/slave communication, the master station has to manage the timing to trigger polling on each slave station. As such, the master station needs the constant timer process to control the timing of polling at the master station.

The constant timer process (part 1) shown in FIG. 6 manages the timing of transmission from the master station 10. As shown in FIG. 6, the number of the . slaves which are registered in the remote I/O system is set to N, and a counter n of the slave station is initialized to be n=1 (step 601). The system compares the counter n with N, and then determines whether n is equal to or less than N (n≦N) (step 602). If n is equal to or less than N (YES at step 602), the system determines whether a communication failure flag of the slave station corresponding to the counter n is ON (step 603). If the communication failure flag is not ON (NO at step 603), the system performs a subtraction process on a transmission timer value of the slave n (step 604). Then, the system determines whether the transmission timer obtained by the subtraction process at the previous step timeouts (i.e., the transmission timer reaches the end of the time period) (step 605). If the timer timeouts (YES at the step 605), the transmission trigger corresponding to the slave is turned ON, and the transmission timer value is reset (step 606). Then, the counter n is increased (n=n+1) (step 607), the control returns to the step 602 to repeat the similar process with respect to the next slave station. If the timer does not timeout (NO at step 605), the control proceeds to step 607, and increases the count value to repeat the similar process with respect to the next slave station. If the communication failure flag of the slave station is ON (YES at step 603), the control proceeds to step 607, and increases the count value and repeats the similar process with respect to the next slave station. The system repeats to increase the counter until the above process is performed on all slave stations. If the counter value n becomes larger than N (n>N) (NO at step 602), this means that the process is performed on all registered slave stations, and the constant timer process (part 1) is complete.

Next, the flowchart of FIG. 7 illustrates a normal transmission process from the master station. The flowchart shows a process at the master station end when the normal communication is performed. As shown in FIG. 7, the system determines whether a slave station with the transmission trigger ON (step 701). Here, a transmission trigger in a slave station is turned ON by step 606 if the constant timer process (part 1) of FIG. 6 is complete. If a slave station with the transmission trigger ON (YES at step 701), the system performs an I/O transmission process on the slave station (step 702), turns the transmission trigger OFF when the I/O process is complete (step 703), and turns to step 701 to determines whether any slave station with the transmission trigger ON exists. The system repeats the I/O transmission process and turning the transmission trigger OFF until no slave station with the transmission trigger ON exists. If there is no slave station with the transmission trigger ON (NO at step 701), the system sets the maximum number of the participation invitation commands to X, and initializes the counter value x (x=1) (step 704). Here, the participation invitation commands are used to have a new slave station participate in the communication system. In the remote I/O system, if, for example, the system performs the participation invitation process on multiple slave stations at the same time, the I/O communication performed in steps 701-703 may be delayed. As such, in order to ensure the performance of the I/O communication, when there are multiple slave stations to participate in the communication network, the maximum number of the participation invitation processes executed at one time (e.g., in one cycle) is limited. Specifically, it is assumed that the participation invitation is performed only once in one cycle (the maximum transmission number of the participation invitation commands X=1). Thus, if there are five slave stations subject to the participation invitation, a participation invitation command is transmitted to a single slave station in a single cycle because the maximum transmission number of the participation invitation commands is 1. In such a case, five cycles are needed in order to finish the participation invitation with respect to five slave stations.

In the participation invitation of the slave stations, the system determines whether there is a slave subject to the participation invitation (step 705). If there is no slave station subject to the participation invitation, the process is completed. By contrast, if there is a slave station subject to the participation invitation (YES at step 705), the counter value is compared with the maximum transmission number of the participation invitation commands, and the system determines whether the counter value x is equal to or less than the maximum transmission number of the participation invitation commands (x≦X) (step 706). If the counter value x is larger than the maximum transmission number of the participation invitation commands X (NO at step 706), the number of the slave subject to the participation invitation exceeds the maximum transmission number of the participation invitation commands, and thus, the process is completed. On the other hand, the counter value x is equal to or less than the maximum number of the participation invitation commands X (YES at step 706), the system performs a transmission process of the participation invitation command on the slave station subject to the participation invitation (step 707), as described later in detail. Then the counter value x is increased (step 708), the control returns to step 705 to repeat the process until there is no slave subject to the participation invitation or until the counter value x exceeds the maximum number of the participation invitation commands, and then ends the process.

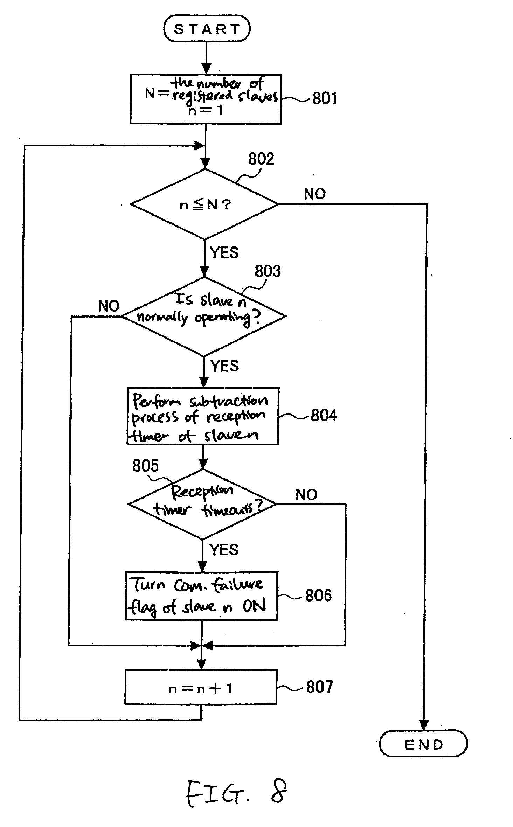

Next, the constant timer process of the master station (part 2) will be described referring to a flowchart of FIG. 8. In the remote I/O system of the invention, a communication failure occurs in the master/slave communication, the constant timer process (part 2) detects the communication failure. Also, the constant timer process (part 2) manages the timing where the master station 10 receives a reply from each slave station. As shown in FIG. 8, the number of the slaves which are registered in the remote I/O system is set to N, and a counter n of the slave station is initialized to be n=1 (step 801). The system compares the counter n with N, and then determines whether n is equal to or less than N (n≦N) (step 802). If n is equal to or less than N (YES at step 802), the system determines whether the slave station corresponding to the counter n is normally operating (step 803). If the slave station is normally operating (YES at step 803), the system performs a subtraction process on a reception timer value of the slave n (step 804). Then, the system determines whether the reception timer obtained by the subtraction process at the previous step timeouts (i.e., the reception timer reaches the end of the time period) (step 805). If the timer timeouts (YES at the step 805), which means that the master station failed to receive a reply from the slave station within a predetermined time period, then the system construes that a communication failure has occurred, and turns a communication failure flag corresponding to the slave ON (step 806). Then, the counter n is increased (n=n+1) (step 807), the control returns to the step 802 to repeat the similar process with respect to the next slave station.

If the timer does not timeout (NO at step 805), the control proceeds to step 807, and increases the count value to repeat the similar process with respect to the next slave station. If the slave is not normally operating (NO at step 803), the control proceeds to step 807, and increases the count value and repeats the similar process with respect to the next slave station. The system repeats to increase the counter until the above process is performed on all slave stations. If the counter value n becomes larger than N (n>N) (NO at step 802), this means that the process is performed on all registered slave stations, and the constant timer process (part 2) is complete.

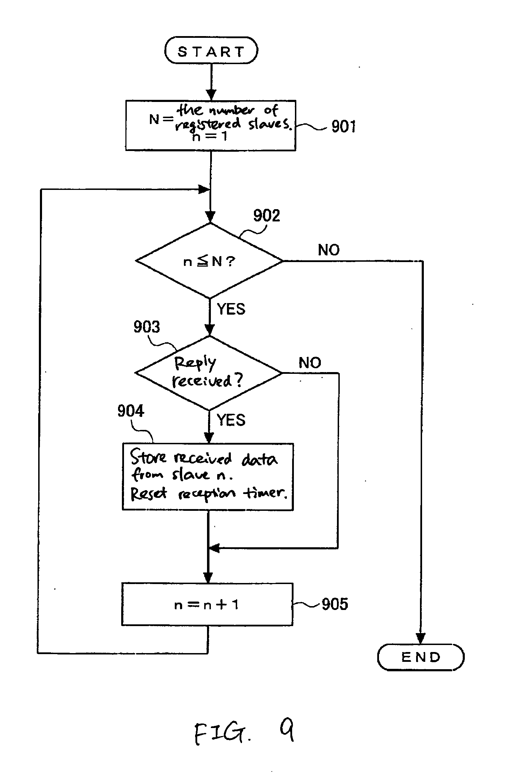

FIG. 9 illustrates a normal reception process of the master station. Similar to the normal transmission process shown in FIG. 6, the number of the slaves which are registered in the remote I/O system is set to N, and a counter n of the slave station is initialized to be n=1 (step 901). The system compares the counter n with N, and then determines whether n is equal to or less than N (n≦N) (step 902). If the counter value n is larger than the number of the registered slave stations N (YES at step 902), the system determines that a reply from a slave station corresponding to the counter value n can be received (step 903). If the reply from the slave station is received (YES at step 903), the system performs a reception data storing process to store the received data from the slave station n, and resets the timer value (step 904). Then, the counter value n is increased (step 905), and the control returns to step 902 to repeat the process. If the reply from the slave station is not received (NO at step 903), the system does not perform the process of step 904, and proceeds directly to step 905 to increase the counter value. Then, the system repeats the process until the counter value n exceeds the number of the registered slave stations N.

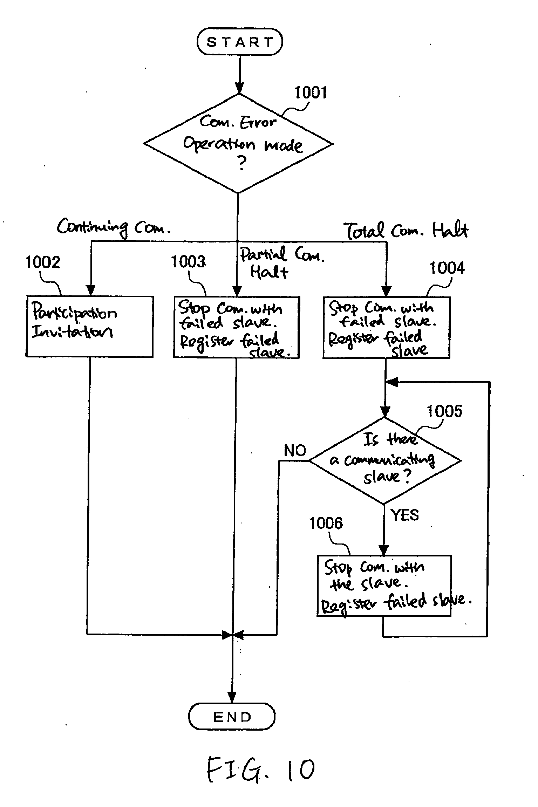

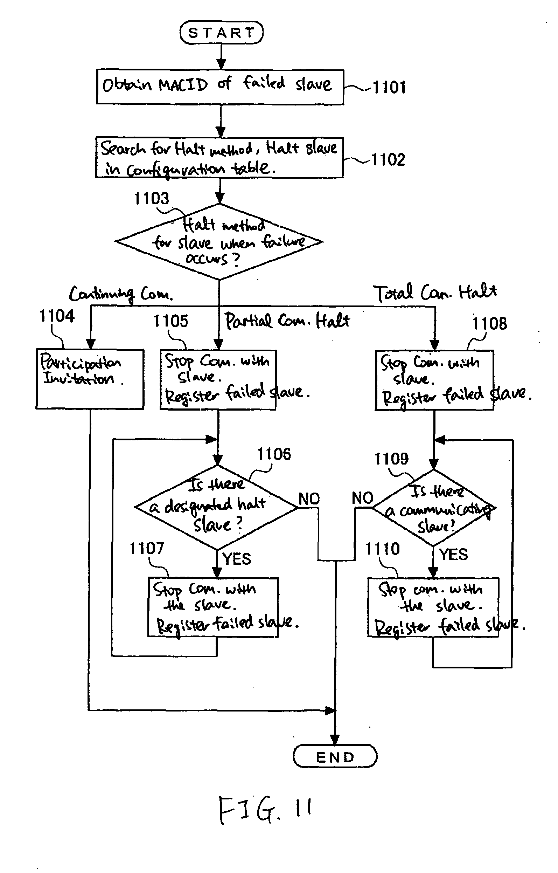

FIGS. 10 and 11 illustrate part 1 and part 2, respectively, of the process at the master station end when a communication failure is detected. As described referring to FIG. 8, the system according to the example embodiment detects a communication failure in the constant timer process (part 2), and, when the failure is detected, the communication failure flag is turned ON. When the communication failure flag is turned ON, the master station 10 performs the following communication failure process. First, as shown in FIG. 10, the master station 10 determines the operation mode for a communication failure (or a communication error) at the slave station which has an ON communication failure flag (step 1001). The operation mode for the communication failure referred to here means one of the failure operation modes of the master station which is selected or configured by the user (the "continuing communication mode," the "partial communication halt mode," and "total communication halt mode"). In step 1001, if the selected operation mode is the continuing communication mode (continuing communication at step 1001), the system performs the participation invitation process on the failed slave (step 1002) because this is an operation mode where the slave station is restored back to the normal communication as soon as the failure at the slave station is resolved, and ends the process. If the selected operation mode is the partial communication halt mode (partial communication halt at step 1001), the system stops the communication with the failed slave, and registers the failed slave (step 1003), and ends the process.

If the selected operation mode is the total communication halt mode (total communication halt at step 1001), the system stops the communication with the failed slave, and registers the failed slave (step 1004). Then, the system determines whether there is a slave which is in communication (step 1005). If there is a communicating slave (YES at step 1005), the system stops the communication with the communicating slave, registers it as a failed slave (step 1006), and returns to step 1005. The system repeats the process until the system stops the communication with all slave stations, and registers all failed slaves. If there is no communicating slave (NO at step 1005), then that means that all communication with all slave stations is stopped, and the system ends the process.

The flowchart of FIG. 10 corresponds to the first example embodiment of the invention, and does not correspond to the second example embodiment of the invention where the configuration table is referred to, and the system enables individual setting of the failure operation mode of the master station for each slave station in the system. FIG. 11 illustrates a process which the master station performs when a communication failure occurs according to the second example embodiment of the invention.

As shown in FIG. 11, the system obtains a MACID (media access control ID) of the failed slave station (step 1101). The MACID is an address which is individually assigned to each slave station, and may be any suitable data which uniquely identifies each slave station. The system refers to the configuration table shown in FIG. 5, and searches for the failure operation mode corresponding to the slave station, and the slave station subject to the communication halt (step 1102). Then, the system retrieves the halt method for the communication failure of the slave station (the failure operation mode) (step 1103). If the failure operation mode is the continuing communication mode (continuing communication at step 1103), the system performs the participation invitation process on the failed slave station (step 1104), and ends the process for the communication failure detection.

If the failure operation mode configured for the slave station is the partial communication halt mode (partial communication halt at step 1103), the system stops the communication with the failed slave station, and registers the station as a failed slave station (step 1105). Then, the system determines whether there is any slave station in communication among the slave stations which are designated to be stopped (step 1106). Here, the "slave stations which are designated to be stopped" are, for example, the slave group G in FIGS. 2A and 2B, or slave stations corresponding to the slave station "3" designated in the right column in the configuration table shown in FIGS. 5B and 5C. In the example of FIGS. 2A and 2B, if the slave station S3 has a communication failure, the system performs the partial communication halt mode on the slave stations S2, S3, and S4. In other words, the system have to stop the communication with the slave station subject to the halt of the communication ("designated halt slave station") if such slave station is still in communication. As such, if there is a slave station among the designated halt slave stations (YES at step 1106), the system stops the communication with the slave station, registers the station as a failed slave (step 1107), and returns to step 1106 to further determines whether there is any other slave station among the designated halt slave station which is still communicating. If there is no communicating slave station among the designated halt slave stations (NO at step 1106), then that means that the communication with respect to all designated halt slave stations in the configuration table is stopped, and the system ends the process.

If the failure operation mode configured to the slave station is the total communication halt mode (total communication halt at step 1103), the system stops the communication with the failed slave station, and registers the station as a failed slave station (step 1108). The system determines whether there is a slave station which is still communicating (step 1109). If there is a slave which is communicating (YES at step 1109), the system stops the communication with the slave station, registers the station as a failed slave (step 1110), and returns to step 1109 to further determines whether there is any other slave station which is still communicating. If there is no communicating slave station (NO at step 1109), then that means that the communication with respect to all slave stations in the system is stopped, and the system ends the process.

According to the first and second example embodiments of the invention, the remote I/O system detects a communication failure in the master/slave communication in the remote I/O system, the master station performs a communication halt or a continuing process with respect to each slave station based on the failure operation mode configured to each slave station in the system by the user. In the example embodiment, when the failure operation mode is the "total communication halt," or the "partial communication halt," the communication with the slave which is subject to the halt process is stopped, and the slave station maintains the failure condition (i.e., the communication halt condition).

A communication resuming process with the communication failed slave (or the communication halt slave) by the master station will now be described. The following communication resuming process may be applicable to the first and second example embodiments of the invention.

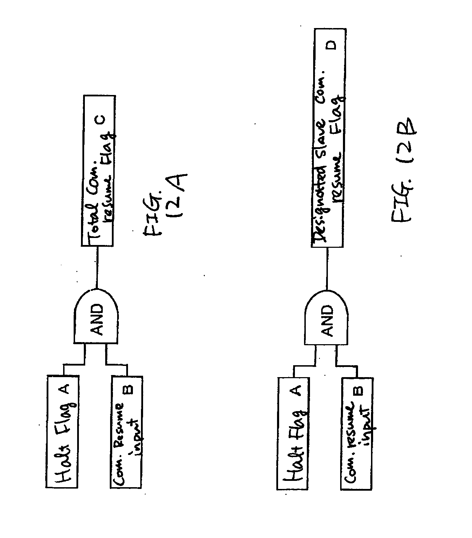

The communication resuming process with a slave station of which communication is stopped may be implemented by an automatic mechanism by a software program, or a manual resuming mechanism using a message generated by a software tool. FIGS. 12A and 12B illustrate an example of a program which performs automatic resumption. FIG. 12A shows an example of a software program for performing the total communication resumption which is applicable to the total communication halt of the failure operation mode. FIG. 12B shows an example of a software program for performing the communication resumption on the designated slave which is applicable to the partial communication halt of the failure operation mode. As shown in FIG. 12A, in order to perform the total communication resumption, when a stop flag A, and a communication resumption input B exist, a total communication resumption flag C is triggered to perform a process for resuming the total communication. By contrast, as shown in FIG. 12B, in the case of the partial communication halt, only the communication with the designated slave(s) may be resumed. As such, when a stop flag A, and a communication resumption input B exist, a flag D representing communication resumption with respect to the designated slave station is triggered to perform a process for resuming the communication with the slave station which have an active communication resumption flag (or the designated slave). Here, the communication resuming process is the participation invitation process described above.

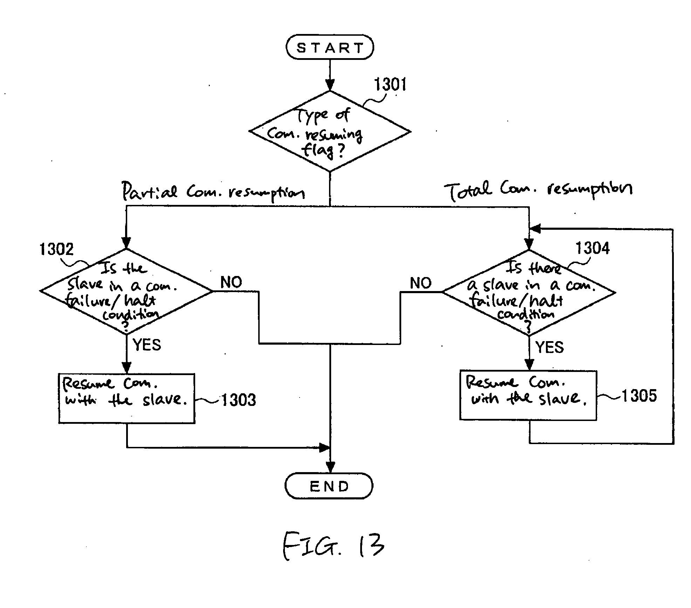

FIG. 13 illustrates a flowchart of the process at the master station with respect to the above-described automatic communication resumption. As shown in FIG. 13, first, the master station checks the type of a communication resumption flag (step 1301). The communication resumption flag may be one of the "total communication resumption flag C" and "designated slave communication resumption flag Data" shown in FIGS. 12A and 12B. If this flag is the designated slave communication resumption flag (partial communication resumption) (partial communication resumption at step 1301), the system determines whether the slave station is in a communication failure/halt condition (step 1302). If the slave station is in a communication failure/halt condition (YES at step 1302), the communication with the slave station is resumed (step 1303). If the slave station is not in a communication failure/halt condition (NO at step 1302), the automatic communication resuming process ends.

If this flag is the total communication resumption flag (total communication resumption) (total communication resumption at step 1301), the system determines whether the slave station is in a communication failure/halt condition (step 1304), and performs the communication resuming process on the slave station in a communication failure/halt condition (step 1305). Then, the system returns to step 1304, and performs the communication resumption process one by one until no slave station is in a communication failure/halt condition exists. If there is no slave station is in a communication failure/halt condition (NO at step 1304), then that means that all communication has been resumed, and the automatic communication resuming process ends.

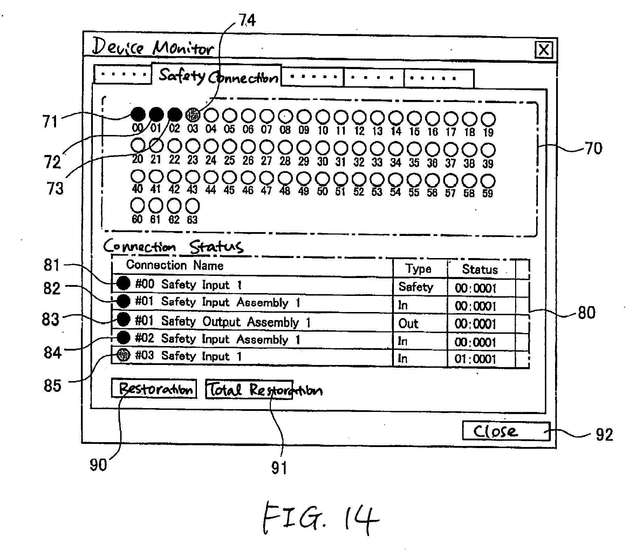

As described above, an event such as a message may manually trigger the communication resumption. FIG. 14 illustrates an example of the total communication resumption/partial communication resumption by such an event. FIG. 14 shows a screen displayed on a personal computer connected to the master station. This example of the remote I/O system provides a device status display region 70 which indicates a status of each slave station connected to the master station. In the device status display region 70, each slave station connected to the remote I/O system, and a communication condition corresponding to each slave station are displayed. In this example, four slave stations (#00-03) represented by symbols 71-74 are indicated as being connected, and the indication of the stations is colored to show the connected stations. The communication condition for each slave station is also displayed in colors where the slave stations represented by solid circles are shown as in normal operation, and the slave station represented by a gray circle is shown as in a failed communication condition. The white (or blanked) circles #04-63 in the rest of the display area 70 represent no connection of a slave station. It is noted that the above example of coloring for the display is merely exemplary, and may be modified as necessary to indicate the slave station connected to the system, and its communication condition.

In the example screen, there is a connection status display area 80 indicating a connection status of each slave station. This area shows the communication condition of each slave station indicated in the device status display area 70 in more detail, which includes its connection name, type and status. In this example, the slave station represented by reference symbol 71 (#00) is shown in the section represented by the reference symbol 81. The slave station represented by reference symbol 72 (#01) is shown in the sections represented by the reference symbols 82 and 83. The slave station represented by reference symbol 73 (#02) is shown in the section represented by the reference symbol 84. The slave station represented by reference symbol 74 (#03) is shown in the section represented by the reference symbol 85. From the screen, one can easily recognize that the slave station (#03) is in a communication halt condition due to a communication failure, etc. In order to resume the communication with the slave station in a communication halt condition, the user can move the cursor to the slave station (#03) represented by the failed connection (displayed in gray), select the slave station by clicking, and perform the communication resuming process with respect to the designated slave station (#03) by clicking the "restoration" button in the bottom of the screen. In this example, there is only one slave station which is in a communication failure condition (i.e., #03). However, if there are multiple slave stations which are failed, the user can select the multiple slave stations by clicking the icons for the stations, and click the "restoration" button to perform the communication resuming process with respect to the multiple slave stations. Similarly, the user can perform the total communication resumption which enables communication resumption with respect to all connections in a halt condition due to a communication failure, etc. by clicking a "total restoration" button in the bottom of the screen. A "close" button to close the screen is shown by reference symbol 92 in the figure.

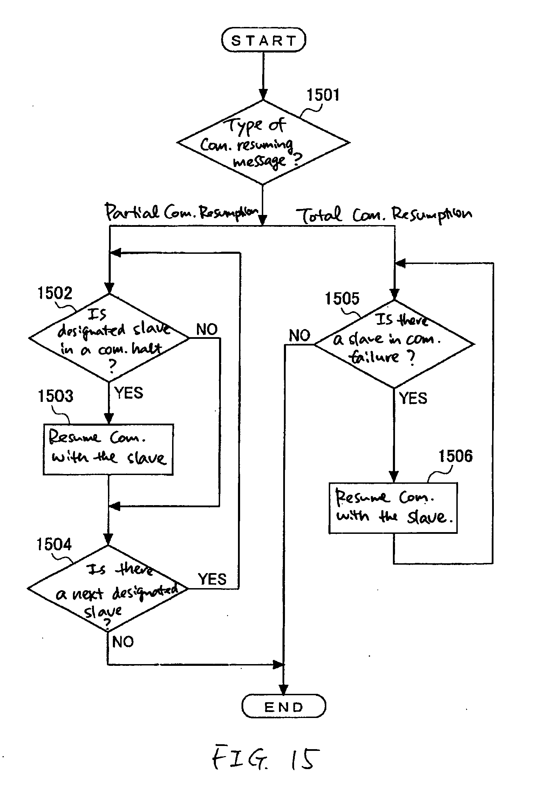

FIG. 15 illustrates a flowchart showing the communication resuming process at the master station according to the manual communication restart using an event. In this case, an event such as a message is assumed to be generated. Thus, the system first determines the type of the communication resuming message (step 1501). If the message is the restoration button 90 in FIG. 14 (partial communication resumption at step 1501), then the system determines whether the designated slave station is in a communication halt condition (step 1502). If the station is not communicating, the system performs the communication resuming process on the slave station (step 1503), and determines whether there is an additional designated slave station (step 1504). If the slave station is communicating (NO at step 1502), then the system does not have to perform the communication resuming process, and proceeds to step 1504 to see whether there is an additional designated slave station. If there is a next designated slave (YES at step 1504), the system returns to step 1502, and repeats the process until there is no additional designated slave. If there is no additional designated slave station (NO at step 1504), the manual communication restart process ends.

If the communication restarting message is the total restoration button 91 shown in FIG. 14 (total communication restoration at step 1501), then the system determines whether there is a slave station which is in a communication halt condition due to a communication failure (step 1505). If there is a slave which is in a communication failure condition, the system performs the communication resuming process with respect to the slave station, and returns to step 1505 to determine whether there is an additional slave station in a communication failure. If there is no slave in a communication failure (NO at step 1505), then that means that all slave stations are performing normal communication, and the manual communication resuming process ends. The manual communication resuming process enables the user to select a plurality of slave stations even for the partial communication resumption, and to perform the communication resuming process on the designated multiple slave stations.

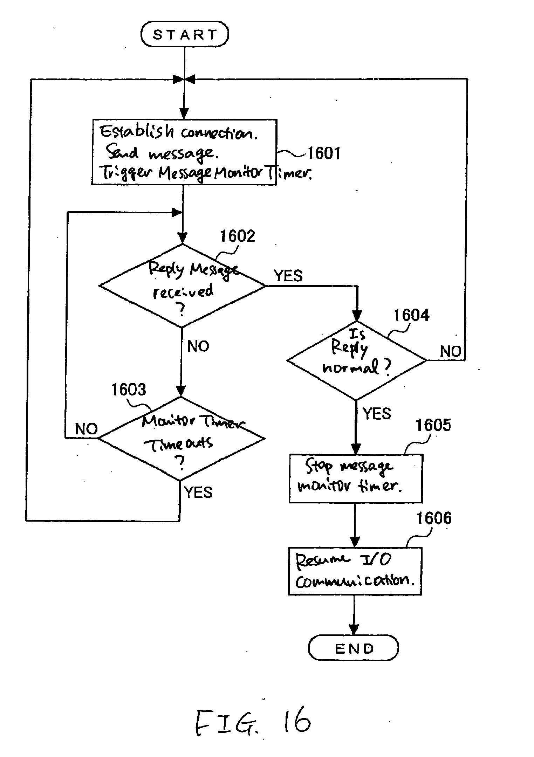

The example embodiment of the invention covers from detection of a failure to communication resumption of a slave station in a failure/halt condition. FIG. 16 illustrates a flowchart showing details of the participation invitation/communication resuming process performed by the master station when the communication is resumed. First, the system sends a connection establishing message to the slave station, and triggers a message monitor timer (step 1601). The system determines whether a reply message in response to the transmitted connection establishing message from the slave station is received (step 1602). If the message has not been received yet, the system determines whether the message monitor timer triggered previously timeouts (step 1603). If the timer timeouts (YES at step 1603), the system returns to step 1601 to repeat the process. If the monitor timer does not timeout, returns to step 1602 to repeat the process until the timer timeouts or until the reply message is received. If the reply message from the slave station is received (YES at step 1602), the system determines whether the reply is normal (step 1604). Whether the reply is normal is determined by whether the replied message is proper, whether the slave station is ready for the participation invitation process, etc. If the reply is not normal (NO at step 1604), the system returns to step 1601 to repeat the process. If the reply is normal (YES at step 1604), the message monitor timer is not necessary, and thus, is stopped (step 1605). Upon reception of the reply from the slave station, the master/slave communication is deemed to be restored. In addition, the fact that the reply message is normal means that the system can resume the normal communication, and thus, the I/O communication is started (step 1606), thereby ending the participation invitation/communication resuming process.

In a remote I/0 system, the example embodiment of the invention provides a system which enables a total communication halt mode, a partial communication halt mode, and a continuing communication mode as failure operation modes when a communication failure occurs.

The example embodiment of the invention provides a system which enables to individually configure the failure operation mode at the master station with respect to each slave station in the system.

Although the foregoing invention has been described in some detail for purposes of clarity of understanding, it will be apparent that certain changes and modifications may be practiced without departing from the spirit and scope of the invention as defined in the claims. Further, features of the invention described herein may be provided alone or in any combination.

## Claims

1. A remote I/O system comprising:
a plurality of slave stations which are I/O terminal devices; and
a mater station which is a PLC (programmable logic controller) configured to communicate with the plurality of the slave stations,
wherein
the master station includes a communication failure detector configured to assume that a communication failure occurred when the master station has not received a reply from a failed slave station among the slave stations,
the master station has, as a failure operation mode, a partial communication halt mode where the master station
stops communicating with the failed slave station,
allows the failed slave station to maintain the communication failure by not performing a communication resuming process on the failed slave station, and
continues to communicating with the rest of the slave stations except the failed slave station.

2. The remote I/O system of claim 1, wherein the master station further has, as additional failure operation modes,
a total communication halt mode where the master station stops communicating with all of the slave stations, and
a continuing communication mode where the master station performs the communication resuming process on the failed slave station, and
wherein the master station is configured to allow a user to select, as a failure operation mode, one of the partial communication halt mode, the total communication halt mode, and the continuing communication mode, and the master station is configured to perform the selected failure operation mode when the communication failure occurs.

3. The remote I/O system of claim 1, wherein the master station includes a communication resuming unit configured to perform the communication resuming process on the failed slave station.

4. The remote I/O system of claim 3, wherein a partial communication resuming command which designates some of failed slave stations specified by a user triggers the communication resuming process on the some of the failed slave stations.

5. The remote I/O system of claim 3, wherein a total communication resuming command which designates all of failed slave stations triggers the communication resuming process on all of the failed slave stations.

6. A remote I/O system comprising:
a plurality of slave stations which are I/O terminal devices; and
a mater station which is a PLC (programmable logic controller) configured to communicate with the plurality of the slave stations,
wherein
the master station includes a communication failure detector configured to assume that a communication failure occurred when the master station has not received a reply from a failed slave station among the slave stations,
the master station has a table specifying a failure operation mode with respect to each of the slave station, and
the master station performs the specified failure operation mode on the failed slave station when the communication failure occurs.

7. The remote I/O system of claim 6, wherein the failure operation mode is a total communication halt mode where the master station stops communicating with all of the slave stations.

8. The remote I/O system of claim 6, wherein the failure operation mode is a partial communication halt mode where the master station stops communicating with some of the slave stations.

9. The remote I/O system of claim 6, wherein the failure operation mode is
a continuing communication mode where the master station performs the communication resuming process on the failed slave station.

10. The remote I/O system of claim 6, wherein the master station includes a communication resuming unit configured to perform the communication resuming process on the failed slave station.

11. The remote I/O system of claim 10, wherein a partial communication resuming command which designates some of failed slave stations specified by a user triggers the communication resuming process on the some of the failed slave stations.

12. The remote I/O system of claim 10, wherein a total communication resuming command which designates all of failed slave stations triggers the communication resuming process on all of the failed slave stations.
